# EUROPEAN PATENT APPLICATION

(11) **EP 2 924 998 A1**
(43) Date of publication of application: **30.09.2015**
(21) Application number: 13857264.9
(22) Date of filing: 16.08.2013
(51) Int. Cl.: H04N 21/218, H04N 21/231

(54) **METHOD, APPARATUS AND SYSTEM FOR ACQUIRING PLAYBACK DATA STREAM OF REAL-TIME VIDEO COMMUNICATION**

(30) Priority: 22.11.2012 CN 201210478764
(71) Applicant: ZTE Corporation, Shenzhen, Guangdong 518057 (CN)
(72) Inventor: OUYANG, Dianyong, Shenzhen Guangdong 518057 (CN); HUANG, Qiang, Shenzhen Guangdong 518057 (CN); LIU, Kehua, Shenzhen Guangdong 518057 (CN); CHEN, Jun, Shenzhen Guangdong 518057 (CN); SHI, Liqing, Shenzhen Guangdong 518057 (CN); XIE, Junjie, Shenzhen Guangdong 518057 (CN)
(74) Representative: Novagraaf Technologies
(86) International application number: PCT/CN2013/081640
(87) International publication number: WO 2014/079239

(57) **Abstract**

The present invention provides a method, device and system for acquiring a playback data stream of real-time video communication. The method includes: recoding, with an interval and one or more key frames, a video code stream in an audio-video code stream which is currently outputted in real time by a real-time video communication terminal in a real-time video communication process; and storing the recoded audio-video code stream in a storage device of the real-time video communication terminal. Through the technical solutions provided by the present invention, network resources can be saved and the cost can be lowered.

## Description

### Technical Field

The present invention relates to multimedia communications field, and in particular to a method, device and system for acquiring a playback data stream of real-time video communication.

### Background

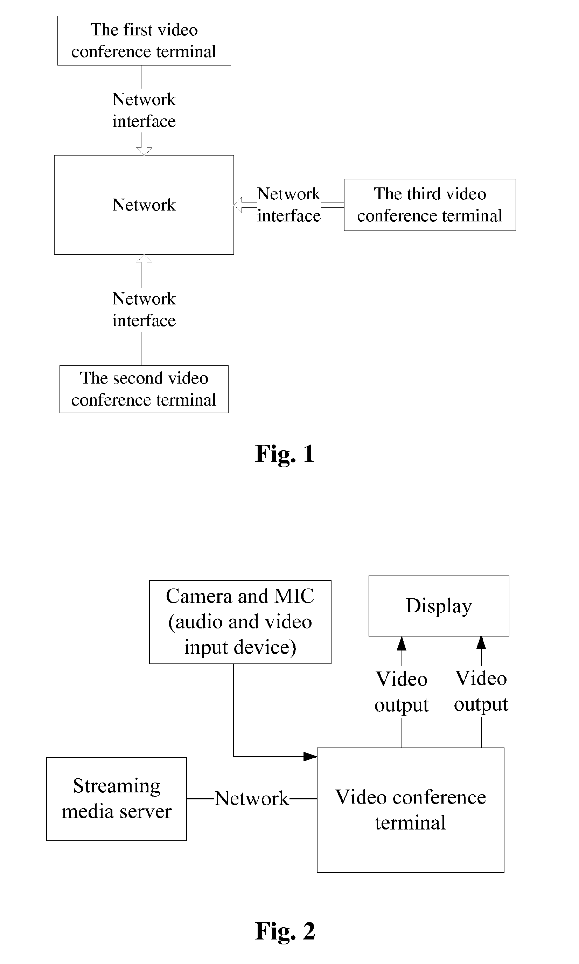

Real-time video communication is primarily used for point to point conferences, multi-point and real-time video communication conferences and realizing transmission and interaction of video images, sound and characters. Fig. 1 is a schematic structural diagram of a video conference system in the related art, as shown in Fig.1, video conference terminals are connected to a network through a network interface so as to realize a video conference among the video conference terminals. Time-shifting means that a user can perform a pausing or backward or fast forward processing on the preceding videos any time when watching a programme.

In real-time video communication, in order to save valuable network resources, except that a key frame coding is used at a key point such as packet loss in the process of video coding, most of the code streams use B frames and P frames for coding. Since a mosaic appears when there are only the B frames and the P frames for decoding, if such code stream is played back directly, there will be a lot of mosaics. Where to start playing back is unable to be positioned because the image have mosaics, and thus existing real-time video communication terminal does not provide a function for realizing time shifting when performing the real-time video communication, so that a conference attendee who comes later could not look back at the previous meeting from the real-time video communication terminal. Furthermore, information and data for the previous communication are unable to be viewed at any time in a video conference communication process. At present, in the related art, a time-shifting function of the real-time video communication is mainly to provide a meeting recording and a meeting on demand through a server, as shown in Fig. 2, the meeting recording and the meeting on demand are provided by a streaming media server through a network, but the use of the server to achieve a time-shifting of the video conference needs to take up the valuable network resources and also needs to update system devices, and the costs are relatively high.

### Summary

Aim at the problem in the related that the waste of network resources and devices are caused by using the server to achieve the time-shifting function of real-time communication, a method, device and system for acquiring a playback data stream of real-time video communication are provided according to the embodiments of the present invention, so as to at least solve the above-mentioned problem.

A method for acquiring a playback data stream of real-time video communication is provided according to one aspect of the embodiments of the present invention,, including: recoding, with an interval one or more key frames, a video code stream in an audio-video code stream which is currently outputted in real time by a real-time video communication terminal in a real-time video communication process; and storing the recoded audio-video code stream in a storage device of the real-time video communication terminal.

In an example embodiment, after storing the recoded audio-video code stream in the storage device of the real-time video communication terminal, the method further includes: receiving a playback request and starting playing the stored audio-video code stream from a starting time point of a playback requested or a key frame which is closest to the starting time point; or transmitting the stored audio-video code stream to a play device with a decoding capability, the play device with a decoding capability receiving a playback request and starting playing the stored audio-video code stream from a starting time point of a playback requested or a key frame which is closest to the starting time point.

In an example embodiment, receiving the playback request includes: responding to a fast forward or fast backward play command of searching a time point for the playback, searching for a key frame corresponding to the fast forward or fast backward play command in the stored video code stream, and decoding the searched key frame to the play device; and receiving the playback request which is input during a fast forward or fast backward play process.

In an example embodiment, receiving the playback request includes receiving the playback request, wherein the playback request carries the starting time point of the playback.

In an example embodiment, after storing the recoded audio-video code stream in the storage device of the real-time video communication terminal, the method further includes: playing the stored audio-video code stream, wherein a audio code stream in the audio-video code stream is played after being subjected to reduce sampling frequency.

In an example embodiment, playing the stored audio-video code stream further includes: playing a video code stream in the audio-video code stream after some video frames are discarded, so that play speeds of the video code stream and the audio code stream are consistent.

In an example embodiment, the recoded video code stream includes: multiplex video code streams coded with different modes.

In an example embodiment, before storing the recoded audio-video code stream in the storage device of the real-time video communication terminal, the method further includes: recoding an audio code stream in the outputted audio-video code stream.

In an example embodiment, when the video code stream in the audio-video code stream which is currently outputted in real time by the real-time video communication terminal is recoded with an interval and one or more key frames, the method further includes: setting one or more pieces of annotation information at positions, in need of attention, of the video code stream.

In an example embodiment, when the video code stream in the audio-video code stream which is currently outputted in real time by the real-time video communication terminal is recoded with an interval and one or more key frames, the method further includes coding video frames at the positions where the annotation information is set according to the one or more key frames.

In an example embodiment, after storing the recoded audio-video code stream in the storage device of the real-time video communication terminal, the method further includes: receiving an on demand request of a play device having a decoding capability and transmitting the stored audio-video code stream to the play device for playing.

A device for acquiring a playback data stream of real-time video communication is provided according to another aspect of the embodiments of the present invention, including: an encoding-decoding component, configured to recode, with an interval and one or more key frames, a video code stream in an audio-video code stream which is currently outputted in real time by a real-time video communication terminal in a real-time video communication process; and a storing component, configured to store the recoded audio-video code stream which is recoded by the encoding-decoding component in a storage device of the real-time video communication terminal.

In an example embodiment, the device further includes: a main control component, configured to receive a playback request and start playing the stored audio-video code stream from a starting time point of a playback requested or a key frame which is closest to the starting time point.

In an example embodiment, the main control component is configured to, in respond to a fast forward or fast backward play command of searching a time point for the playback, search for a key frame corresponding to the fast forward or fast backward play command in the stored video code stream and decode the searched key frame to a play device; and receive the playback request which is input during a fast forward or fast backward play process.

In an example embodiment, the device further includes: a play component which is configured to play the stored audio-video code stream, wherein an audio code stream in the stored audio-video code stream is played after being subjected to reduce a sampling frequency.

In an example embodiment, the play component is further configured to play a video code stream in the stored audio-video code stream after some video frames are discarded, so that play speeds of the video code stream and the audio code stream are consistent.

In an example embodiment, the device further includes: a transmitting component, configured to transmit the audio-video code stream stored by the storing component to a play device having a decoding capability.

In an example embodiment, the device further includes: a receiving component, configured to receive an on demand request from the play device, wherein the on demand request is configured to request the stored audio-video code stream on demand.

In an example embodiment, the encoding-decoding component is further configured to recode an audio code stream in the outputted audio-video code stream.

In an example embodiment, the encoding-decoding component is further configured to set one or more flag bits at positions, in need of attention, of the video code stream in the audio-video code stream which is currently outputted in real time by the real-time video communication terminal.

A real-time video communication terminal is provided according to another aspect of the embodiments of the present invention, including: the above-mentioned device.

An on demand system for a real-time video communication data stream is provided according to another aspect of the embodiments of the present invention, including: a play device having a decoding capability and the above-mentioned real-time video communication terminal, wherein the play device is configured to request an audio-video code stream stored in the real-time video communication terminal on demand, wherein the audio-video code stream is a stored audio-video code stream obtained by the real-time video communication terminal coding, with an interval and one or more key frames, a video code stream in an audio-video code stream which is currently outputted in real time in a real-time video communication process.

In an example embodiment, the play device is connected to the real-time video communication terminal through a local network.

In the embodiments of the present invention, a real-time video communication terminal recodes the audio-video code stream which is outputted in the current real-time video communication, and one or more key frames are periodically added in the video code stream, so that the video code stream which can be played back may be acquired from the real-time video communication terminal side without achieving the time-shifting of a real-time video communication content by a server, thereby saving network resources and reducing costs.

### Description of the Accompanying Drawings

Drawings, provided for further understanding of the present invention and forming a part of the specification, are used to explain the present invention together with embodiments of the present invention rather than to limit the present invention, wherein:
Fig. 1 is a schematic structural diagram of a video conference system in the related art;
Fig. 2 is a schematic structural diagram of real-time video communication supporting time-shifting in the related art;
Fig. 3 is a schematic structural diagram of a device for acquiring a playback data stream of real-time video communication according to embodiment I of the present invention;
Fig. 4 is a schematic structural diagram of a device for acquiring a playback data stream of real-time video communication according to an optional implementation in embodiment I;
Fig. 5 is a schematic structural diagram of a device for acquiring a playback data stream of real-time video communication according to another optional implementation in embodiment I;
Fig. 6a is a schematic structural diagram of a real-time video communication terminal according to an optional implementation in embodiment II;
Fig. 6b is a schematic structural diagram of an optional real-time video communication terminal according to an embodiment of the present invention;
Fig. 7 is a schematic structural diagram of an on demand system for a real-time video communication data stream according to an embodiment of the present invention;
Fig. 8 is a flowchart of a method for acquiring a playback data stream of real-time video communication according to embodiment IV of the present invention; and
Fig. 9 is a flowchart of playing back a real-time video communication content according to embodiment V of the present invention.

### Detailed Description of the Embodiments

The present invention is described below with reference to the accompanying drawings and embodiments in detail. Note that, the embodiments of the present invention and the features of the embodiments can be combined with each other if there is no conflict.

In real-time video communication, in order to save valuable network resources, except that the key frame coding is used at a key point such as packet loss in the process of video coding, most of the code streams use B frames and P frames for coding. The mosaic appears when there are only the B frames and the P frames for decoding, if such code stream is played back directly, there will be a lot of mosaics. There is no sound because the image has mosaics, and thus where to start playing back is unable to be positioned, which will affect the communication effect. The technical solution according to the embodiments of the present invention is provided that a real-time video communication terminal finishes to perform timed video recoding with one or more key frames (such as I frame) on the outputted video code stream (such as a key frame at a second, or, a key frame at several seconds, etc.) while outputting an audio-video code stream of the current real-time video communication, and the recoded code frame is stored in a storage device, such as an SD card, a TF card, a USB flash disk or a hard disk, and so on, of the real-time video communication terminal, so as to acquire a real-time communication data flow which can be played back. When part of the personnel or all the personnel need to catch up a previous communication content, the timed audio-video code stream with one or more key frames, which has been coded originally, is decoded, and the decoded audio-video code data are outputted to a play device which may be a original play device and also may be other play devices. When the operation of playback is performed, the search requests to play back a key frame which is near the time point and playback is started from the key frame, since the playback is started from the key frame, a playback point can be accurately positioned.

In the embodiments of the present invention, the real-time video communication terminal includes terminals supporting the real-time video communication, such as a mobile phone or a conference TV, and so on. The key frame refers to a compressed frame which can decompress independently without needing other reference frames and has no error images, such as I frame.

### Embodiment I

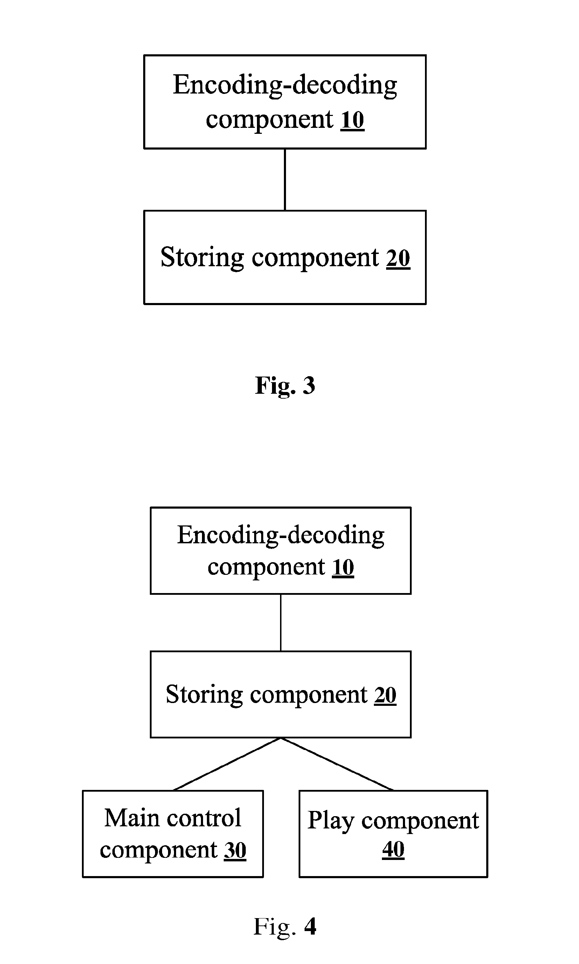

Fig. 3 is a schematic structural diagram of a device for acquiring a playback data stream of real-time video communication according to an embodiment of the present invention. As shown in Fig. 3, the device for acquiring a playback data stream of real-time video communication of the embodiments of the present invention mainly includes: an encoding-decoding component 10 which is configured to recode, with an interval and one or more key frames, a video code stream in an audio-video code stream which is currently outputted in real time by a real-time video communication terminal in a real-time video communication process; and a storing component 20 which is configured to store the recoded audio-video code stream recoded by the encoding-decoding component in a storage device of the real-time video communication terminal.

In the present embodiment, when the encoding-decoding component 10 completes decoding and compounding the video code stream of the of a current audio-video communication content of the real-time video communication terminal, and completes decoding and processing audio code stream and prepares to output, interval video recoding with one or more key frames is performed on video code stream which is prepared to be outputted, i.e. some video frames in the video code frames are recoded and are coded as key frames. In one implementation of the present embodiment, a coding mode may be set according to requirements, for example, 1080p@60 is used in a video conference, while a video coding may use 720p@60 at the moment, and duplex or multiplex coded with different modes also may be performed on video code stream which are prepared to be outputted, so as to meet the playback requirement of different devices. The coded audio-video code stream is directly stored in a storage device of the real-time video communication terminal by a storing component 20.

In one implementation of the present embodiment, in order to enable the stored audio-video code stream to further meet the requirement of the user, before the storing component 20 saves the audio-video code stream, the encoding-decoding component 10 is further configured to recode the audio code stream in the outputted audio-video code stream.

In one implementation of the present embodiment, after the storing component 20 saves the coded audio-video code stream and the user needs to play back the real-time video communication content, the playback may be directly conducted on the real-time video communication terminal. Therefore, as shown in Fig. 4, the real-time video communication terminal may further include: a main control component 30 which is configured to receive the input playback request and start playing the stored audio-video code stream from a starting time point of a playback requested. In an example embodiment, the play also may be started at a key frame which is closest to the starting time point.

When the user requests to play back, the manner of fast forward or fast backward play may be used to find an appropriate playback time point, in one implementation of the present embodiment, the main control component 30 is configured to, in respond to a fast forward or fast backward play command of searching the time point for the playback, search for a key frame corresponding to the fast forward or fast backward play command in the stored video code stream and decode the searched key frame to a play device; and receive a input playback request during a fast forward or fast backward play process. In this implementation, the real-time video communication terminal finds an appropriate position through a search code stream in a fast forward or fast backward mode, decoding and playback are started at the appropriate position, since one or more key frames are decoded during searching each time, there is no mosaic in a search process, the user may accurately position the starting time point for playback.

When the user requests to play back the stored audio-video code stream, the user may select to play communication contents which have happened at a normal speed; however, the normal communication contents are unable to be caught up if the play is performed like this all the time, and thus the user may select to play in a fast forward manner, for example, the stored communication contents are played at a multiple of the normal speed, such as twice or four times of the speed. In such case, in order to enable the user to hear the sound part of the stored communication contents, in one implementation of the present embodiment, the coded audio data can be played after being subjected to reduce sampling frequency, such as discarding half of the data or obtaining half of the data through interpolation, although the sound has a modified tone, the contents of the talk can be heard clearly. Therefore, in the implementation of the present embodiment, as shown in Fig. 4, the device may further include a play component 40 which is configured to play the stored audio-video code stream, wherein an audio code stream in the stored audio-video code stream is played after being subjected to reduce a sampling frequency.

Likewise, the video code stream also may be played at twice, four times or non-integer times of the speed by discarding video frames after being decoded, so as to maintain to be consistent with the audio code stream. Therefore, in one implementation of the present embodiment, the play component 40 is further configured to play the video code stream in the stored audio-video code stream after some video frames are discarded, so that play speeds of the video code stream and the audio code stream are consistent.

In an optional implementation of the present invention, the encoding-decoding component 10 is further configured to set one or more pieces of annotation information at positions, in need of attention, of the video code stream in the audio-video code stream which is currently outputted by the real-time video communication terminal in real time. The annotation information may be stored in an audio-video code stream file and also may be separately placed in a file, and a plurality of pieces of annotation information may be set at the same time. For example, a piece of annotation information "starting a meeting" may be set at the position of a video frame when the meeting starts, and a piece of annotation information "XXX starts speaking" may be set at the corresponding position when a spokesman starts speaking. A point needing to be caught up or be watched can be found through the annotation information when the subsequent playback or forward is performed. In an optional embodiment, the position for setting the annotation information coincides with the position for setting the key frame.

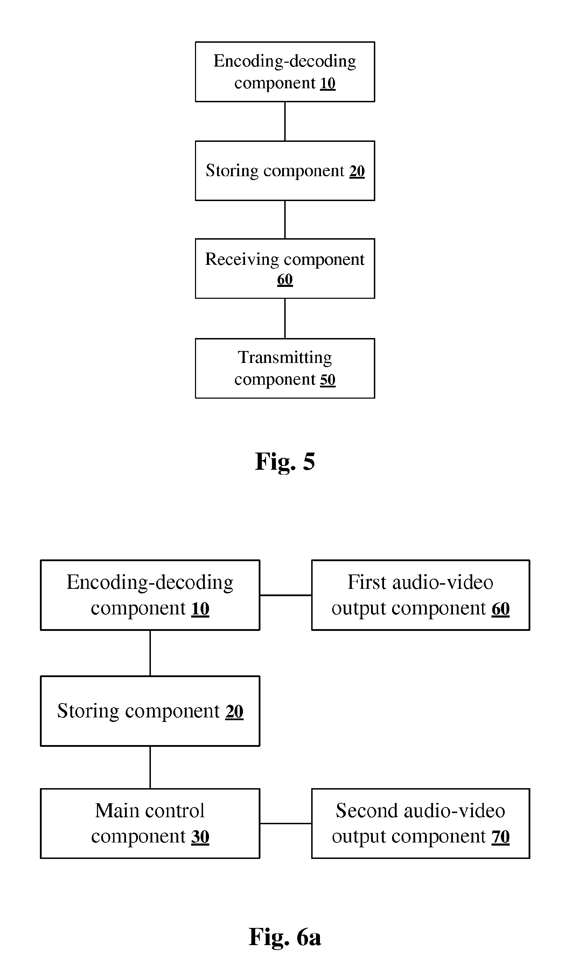

In the above-mentioned implementation of the present embodiment, a decoding function is completed in the device for acquiring a playback data stream of real-time video communication *per se.* That is, the playback is achieved in the device for acquiring the playback data stream of real-time video communication, and of course, it also can be completed in a play device having a decoding capability (such as a mobile phone and a pad). It also may be that the playback is performed after the code stream is transmitted to the play device. Therefore, in one implementation of the present embodiment, as shown in Fig. 5, the device for acquiring the playback data stream of real-time video communication also may include: a transmitting component 50 which is configured to transmit the audio-video code stream stored by the storing component 20 to a play device having a decoding capability.

Or, it also may be that the play device having the decoding capability requests the stored audio-video code stream on demand. That is, the play device sends an on demand request to the device for acquiring the playback data stream of real-time video communication, and thus, in an optional implementation of the present invention, as shown in Fig. 5, the device also may include a receiving component 60 which is configured to receive an on demand request from the play device having the decoding capability, wherein the on demand request is configured to request the stored audio-video code stream on demand.

### Embodiment 2

A real-time video communication terminal is provided in an embodiment of the present invention, the real-time video communication terminal includes the device for acquiring the playback data stream of real-time video communication of any one implementation of the above-mentioned embodiment I and can achieve the function of the device for acquiring the playback data stream of real-time video communication of the above-mentioned embodiment I.

In an optional implementation of the present invention, in order to output a audio-video code stream of the current real-time communication and a audio-video code stream of the playback, as shown in Fig. 6a, the real-time video communication terminal also may include a first audio-video output component 60 which is configured to output the audio-video code stream of the current real-time communication and a second audio-video output component 70 which is configured to output the audio-video code stream of the playback. The second audio-video output component 70 also may be a wired audio-video output interface and also may be a wireless audio-video output interface.

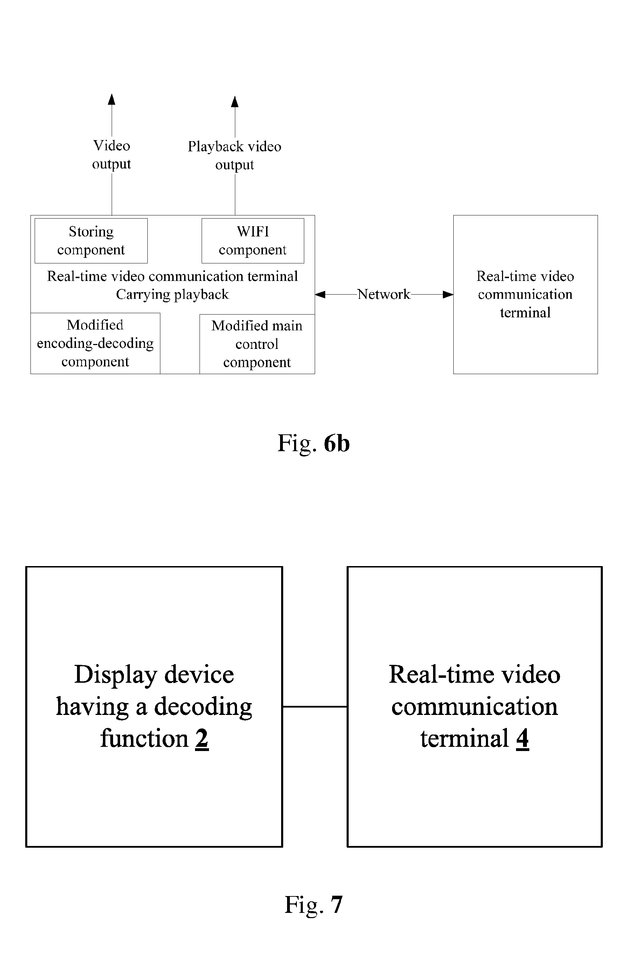

In a practical application, a function component of wireless WIFI may be added into the real-time video communication terminal to realize the function of the transmitting component 50 so as to support a WIFI hot spot, and other wireless devices may play back a previous real-time video communication content by downloading code stream through WIFI. Fig. 6b is a schematic structural diagram of a real-time video communication terminal (i.e. a real-time video communication terminal having playback) in an optional implementation of an embodiment of the present invention, as shown in Fig. 6b, in the example embodiment, the encoding-decoding component and the main control component of a existing real-time video communication terminal are improved, at the same time, a storing component and a WIFI component are added into the real-time video communication terminal. The encoding-decoding component also needs to code and decode a playback video code stream besides completing a normal video code stream coding and decoding. Furthermore, the real-time video communication terminal must be provided with an access device to store the coded code stream; in addition, the WIFI component is added into the real-time video communication terminal to realize the access of one or more wireless devices. The real-time video communication terminal may perform real-time video communication with other real-time video communication terminals through a network.

The improvements of the encoding-decoding component and the main control component in the existing real-time video communication terminal as shown in Fig. 6b lie in: timed video encoding and decoding with one or more key frames is performed on a video code stream which is outputted at a local terminal, the position of playback is determined according to the time which is input by a user, and the one or more key frames are decoded to a display for displaying when fast playback is performed. At this moment, a old content can be played at a normal speed, but a normal communication content is unable to be caught up if the play is performed like this all the time, and thus the user may select to play the old content at multiples of the speed, such as twice or four times of the speed, at this moment, in order to enable the user to hear the sound part of the old content, a decoded audio data are played after being subjected to reduce sampling frequency, such as discarding half of the decoded audio data or obtaining half of the decoded audio data by interpolation, although sound becomes distorted, speech content can be heard clearly. Likewise, the video code stream also may achieve being played at twice or four times of the speed by discarding some video frames after being decoded, so as to maintain to be consistent with the audio code stream.

### Embodiment III

An on demand system for a real-time video communication data stream is also provided according to the embodiments of the present invention.

Fig. 7 is a schematic structural diagram of an on demand system for a real-time video communication data stream according to an embodiment of the present invention, as shown in Fig. 7, the system includes a play device 2 having a decoding function and a real-time video communication terminal 4, wherein the real-time video communication terminal 4 may be the real-time video communication terminal of any one optional implementation in the above-mentioned embodiment II. The play device 2 is configured to request an audio-video code stream stored in the real-time video communication terminal 4 on demand, wherein the audio-video code stream is a stored audio-video code stream obtained by the real-time video communication terminal 4 coding, with an interval and one or more key frames, a video code stream in an audio-video code stream which is currently outputted in real time in a real-time video communication process.

In an example implementation of the present embodiment, the play device 2 may be connected to the real-time video communication terminal 4 through a local network (such as a WIFI).

In the present embodiment, the play device 4 may be a mobile phone, a tablet computer, a personal computer, or a hand-hold player, etc.

### Embodiment IV

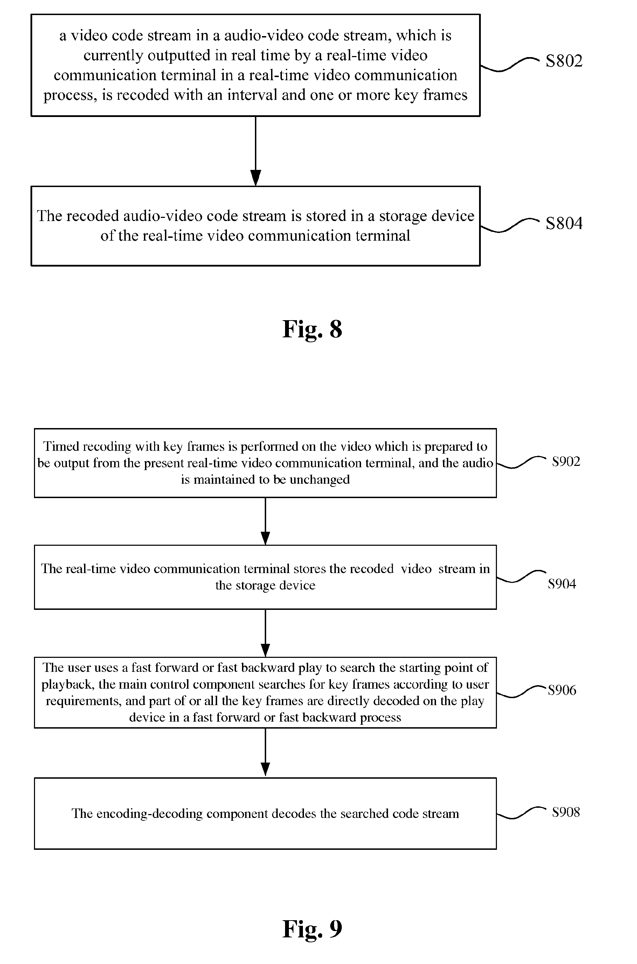

Fig. 8 is a flowchart of a method for acquiring a playback data stream of real-time video communication according to embodiment IV of the present invention, as shown in Fig. 8, the method mainly includes the following steps S802-S804.

In step S802, a video code stream in a audio-video code stream, which is currently outputted in real time by a real-time video communication terminal in a real-time video communication process, is recoded with an interval and one or more key frames.

In step S804, the recoded audio-video code stream is stored in a storage device of the real-time video communication terminal.

In the present embodiment, the audio-video code stream which is outputted by the real-time video communication terminal in the current real-time video communication is recoded, and the one or more key frames are periodically added into the video code stream, so that the video code stream which can be played back may be acquired from the real-time video communication terminal side without achieving the time-shifting of a real-time video communication content by a server, thereby saving network resources and reducing costs.

In one implementation of the present invention, in order to ensure to hear the sound clearly when fast forward or fast backward is conducted, the method also includes: recoding the video code stream in the audio-video code stream which is outputted by the real-time video communication terminal.

In one implementation of the present invention, after the recoded audio-video code stream is stored in the storage device of the real-time video communication terminal, the method further includes: a playback request input by the user is received and the stored audio-video code stream is started playing from a starting time point of a playback is requested; or the stored video code stream and the audio code stream are transmitted to a play device having a decoding capability, the play device receives a playback request input by the user and starts playing the stored video code stream and audio code stream from a starting time point of a playback is requested. Optionally, the play also may be started at a key frame which is closest to the starting time point when the playback is conducted.

In the present embodiment, the user may search the starting time point of the playback through a fast forward or fast backward play command, or the user may directly input the starting time point of the playback. When the user searches for the starting time point of the playback through the fast forward or fast backward play command, the playback request input by the user is received includes: responding to a fast forward or fast backward play command of searching a time point for playback, which is input by the user, is responded, one or more key frames corresponding to the fast forward or fast backward play command in the stored video code stream are searched, and the searched key frames are decoded to the play device; and the playback request which is input by the user during the fast forward or fast backward play process is received. The key frames are searched when the fast forward or fast backward play is conducted, the condition of mosaic does not exist; therefore, the user may accurately position the time point for playback.

In an optional implementation of the present invention, after the recoded audio-video code stream is stored in the storage device of the real-time video communication terminal, the play device having the decoding capability also may request the stored audio-video code stream on demand; therefore, the method further includes: an on demand request is received from the play device having the decoding capability and the stored audio-video code stream is transmitted to the play device for playing.

When the user request to play back, the code stream may be played at a normal speed or the user also may perform fast forward play according to requirements to catch up with current real-time video communication content. In an optional implementation of the present invention, when the user requests for a fast playback, in order to enable the user to obtain enough information, when the playback is conducted, the stored audio code stream starting from the starting time point is decoded and then is played after being subjected to reduce a sampling frequency. More preferably, in order to enable the video play to be consistent with the audio play, the method further includes: the stored video code stream starting from the starting time point or the key frame closest to the starting time point is played after being decoded and discarding part of the video frames, so that play speeds of the video code stream and the audio code stream are consistent.

In the above-mentioned implementation, the play speed at which the user requests to play back may be integral multiples of the normal play speed, such as twice or four times.

In an optional implementation of the present invention, the stored audio-video code stream may be played after the recoded audio-video code stream is stored in a storage device of the real-time video communication terminal. In an example embodiment, in order to catch up with the content of current real-time video communication, the audio code stream in the audio-video code stream is played after being subjected to reduce a sampling frequency.

In another optional implementation of the present embodiment, in order to enable video to be consistent with audio, the video code stream in the audio-video code stream is played after part of video frames are discarded, so that the play speeds of the video code stream and the audio code stream are consistent.

In one implementation of the present embodiment, in order to meet playback requirements of different devices, when timed coding with one or more key frames is performed on the outputted video code stream, the recoded video code stream may comprise duplex or multiplex video code stream coded with different modes.

In one implementation of the present embodiment, when the video code stream which is output by the real-time video communication terminal is coded, notation information may be added at important positions, and the notation information may be stored in an audio-video code stream file and also may be separately stored in one file, in which more notation information may be set simultaneously, so that one or more points needing to be caught up or watched can be found through the annotation information when the subsequent playback or forward is performed. In an optional implementation, the position for setting the annotation information may coincide with the position for setting the key frames. That is, the annotation information may be set at some positions where the key frames are added, or the annotation information may be set at some key positions, and the video frames at the positions where the annotation information is set are coded, that is, the video frames at the positions where the annotation information are coded as key frames.

### Embodiment V

The present embodiment is described in combination with the flow for playing back the real-time video communication content of Fig. 6b. As shown in Fig. 9, in the present embodiment, the playback of the real-time video communication content mainly includes the following steps.

Step S902, during a real-time video communication process, besides completing coding and decoding normal real-time video communication, the encoding-decoding component of the real-time video communication terminal performs timed coding with key frames on the video which is prepared to be output from the real-time video communication terminal at the same time, and the audio is maintained to be unchanged.

Step S904, the real-time video communication terminal stores the recoded audio-video code stream in the storage device.

Step S906, the user uses a fast forward or fast backward play to search a starting point of playback, the main control component searches for key frames according to user requirements, and part of or all the key frames are directly decoded on the play device during the fast forward or fast backward process. Since the key frames for decoding has no mosaics, the user can directly determine when to start playing back according to a played image.

Or, in this step, the user also may directly input the time to play back to directly find a time stamp position so as to find a playback position.

Step S908, the encoding-decoding component decodes the searched code stream. In the step, the user may select to play the content which has been communicated at a normal speed, but since the normal communication content is unable to be caught up if the play is performed like this all the time, the user may select to play old content at multiples of the speed, such as twice or four times of the speed, at this moment, in order to enable the user to hear the sound part of the old content, the decoded audio data are played after being subjected to reduce sampling frequency, such as discarding half of the decoded audio data or obtaining half of the decoded audio data by interpolation, although the sound becomes distorted, speech content can be heard clearly. Likewise, the video also may be played at twice or four times by discarding video frames after being decoded, so as to maintain to be consistent with the audio. Then the processed audio-video data are sent to the play device for playing, so as to complete the playback function.

The above-mentioned steps are described by taking realizing the playback on the real-time video communication terminal as an example, but not limited to this, in practical application, other display devices, such as a PAD or a mobile phone and so on, also may download code stream from the real-time video communication terminal and locally decode the code stream for playing back.

It can be seen from the above description that the problem that the real-time video communication terminal *per se* cannot play back or look forward the previous video is solved by one or more implementations of the embodiments of the present invention, and the time-shifting of the real-time video communication content is realized without the participation of the system.

Obviously, those skilled in the art should know that each of the mentioned modules or steps of the present invention may be realized by universal computing devices; the modules or steps may be focused on single computing device, or distributed on the network formed by multiple computing devices; selectively, they may be realized by the program codes which may be executed by the computing device; thereby, the modules or steps may be stored in the storage device and executed by the computing device; and under some circumstances, the shown or described steps may be executed in different orders, or may be independently manufactured as each integrated circuit module, or multiple modules or steps thereof may be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection of the present invention.

## Claims

1. A method for acquiring a playback data stream of real-time video communication, **characterized by** comprising:
recoding, with an interval and one or more key frames, a video code stream in an audio-video code stream which is currently outputted in real time by a real-time video communication terminal in a real-time video communication process; and
storing the recoded audio-video code stream in a storage device of the real-time video communication terminal.

2. The method according to claim 1, **characterized in that** after storing the recoded audio-video code stream in the storage device of the real-time video communication terminal, the method further comprises:
receiving a playback request and starting playing the stored audio-video code stream from a starting time point of a playback requested or a key frame which is closest to the starting time point; or
transmitting the stored audio-video code stream to a play device with a decoding capability, the play device receiving a playback request and starting playing the stored audio-video code stream from a starting time point of a playback requested or a key frame which is closest to the starting time point.

3. The method according to claim 2, **characterized in that** receiving the playback request comprises:
responding to a fast forward or fast backward play command of searching a time point for the playback, searching for a key frame corresponding to the fast forward or fast backward play command in the stored video code stream, and decoding the searched key frame to the play device; and
receiving the playback request which is input during a fast forward or fast backward play process.

4. The method according to claim 2, **characterized in that** receiving the playback request comprises:
receiving the playback request, wherein the playback request carries the starting time point of the playback.

5. The method according to any one of claims 1 to 4, **characterized in that** after storing the recoded audio-video code stream in the storage device of the real-time video communication terminal, the method further comprises:
playing the stored audio-video code stream, wherein an audio code stream in the audio-video code stream is played after being subjected to reduce a sampling frequency.

6. The method according to claim 5, **characterized in that** playing the stored audio-video code stream further comprises:
playing a video code stream in the audio-video code stream after some video frames are discarded, so that play speeds of the video code stream and the audio code stream are consistent.

7. The method according to any one of claims 1 to 4, **characterized in that** the recoded video code stream comprises: multiplex video code streams coded with different modes.

8. The method according to any one of claims 1 to 4, **characterized in that** before storing the recoded audio-video code stream in the storage device of the real-time video communication terminal, the method further comprises: recoding an audio code stream in the outputted audio-video code stream.

9. The method according to any one of claims 1 to 4, **characterized in that** when the video code stream in the audio-video code stream which is currently outputted in real time by the real-time video communication terminal is recoded with an interval and one or more key frames, the method further comprises: setting one or more annotation information at positions, in need of attention, of the video code stream.

10. The method according to claim 9, **characterized in that** when the video code stream in the audio-video code stream which is currently outputted in real time by the real-time video communication terminal is recoded with an interval and one or more key frames, the method further comprises: coding video frames at the positions where the annotation information is set according to the one or more key frames.

11. The method according to any one of claims 1 to 4, **characterized in that** after storing the recoded audio-video code stream in the storage device of the real-time video communication terminal, the method further comprises: receiving an on demand request from a play device having a decoding capability and transmitting the stored audio-video code stream to the play device for playing.

12. A device for acquiring a playback data stream of real-time video communication, **characterized by** comprising:
an encoding-decoding component, configured to recode, with an interval and one or more key frames, a video code stream in an audio-video code stream which is currently outputted in real time by a real-time video communication terminal in a real-time video communication process; and
a storing component, configured to store the recoded audio-video code stream recoded by the encoding-decoding component in a storage device of the real-time video communication terminal.

13. The device according to claim 12, **characterized in that** the device further comprises:
a main control component, configured to receive a playback request and start playing the stored audio-video code stream from a starting time point of a playback requested or a key frame which is closest to the starting time point.

14. The device according to claim 13, **characterized in that** the main control component is configured to, in respond to a fast forward or fast backward play command of searching a time point for the playback, search for a key frame corresponding to the fast forward or fast backward play command in the stored video code stream, and decode the searched key frame to a play device; and receive the playback request which is input during a fast forward or fast backward play process.

15. The device according to any one of claims 12 to 14, **characterized in that** the device further comprises:
a play component, configured to play the stored audio-video code stream, wherein an audio code stream in the stored audio-video code stream is played after being subjected to reduce a sampling frequency.

16. The device according to claim 15, **characterized in that** the play component is further configured to play a video code stream in the stored audio-video code stream after some video frames are discarded, so that play speeds of the video code stream and the audio code stream are consistent.

17. The device according to any one of claims 12 to 14, **characterized in that** the device further comprises:
a transmitting component, configured to transmit the audio-video code stream stored by the storing component to a play device having a decoding capability.

18. The device according to claim 17, **characterized in that** the device further comprises: a receiving component, configured to receive an on demand request from the play device, wherein the on demand request is configured to request the stored audio-video code stream on demand.

19. The method according to any one of claims 12 to 14, **characterized in that** the encoding-decoding component is further configured to recode an audio code stream in the outputted audio-video code stream.

20. The device according to any one of claims 12 to 14, **characterized in that** the encoding-decoding component is further configured to set one or more flag bits at positions, in need of attention, of the video code stream in the audio-video code stream which is currently outputted in real time by the real-time video communication terminal.

21. A real-time video communication terminal, **characterized by** comprising the device of any one of claims 12 to 20.

22. An on demand system for a real-time video communication data stream, **characterized by** comprising: a play device having a decoding capability and the real-time video communication terminal of claim 21, wherein the play device is configured to request an audio-video code stream stored in the real-time video communication terminal on demand, wherein the audio-video code stream is a stored audio-video code stream obtained by the real-time video communication terminal coding, with an interval and one or more key frames, a video code stream in an audio-video code stream which is currently outputted in real time in a real-time video communication process.

23. The system according to claim 22, **characterized in that** the play device is connected to the real-time video communication terminal through a local network.
